# EUROPÄISCHE PATENTSCHRIFT

(11) **EP 2 894 493 B1**
(45) Veröffentlichungstag und Bekanntmachung des Hinweises auf die Patenterteilung: **14.09.2016**
(21) Anmeldenummer: 14195138.4
(22) Anmeldetag: 27.11.2014
(51) Int. Cl.: G01S 17/42, G01S 7/481, G01S 7/497, G02B 26/10, G02B 7/182

(54) **Optoelektronischer Sensor und Verfahren zur Erfassung von Objekten in einem Überwachungsbereich**
Optoelectronic sensor and method for detecting objects in a surveillance area
Capteur optoélectronique et procédé destiné à la détection d'objets dans une zone de surveillance

(30) Priorität: 10.01.2014 DE 102014100245
(43) Veröffentlichungstag der Anmeldung: 15.07.2015
(73) Patentinhaber: SICK AG, 79183 Waldkirch (DE)
(72) Erfinder: Nübling, Ralf Ulrich, 79211 Denzlingen (DE); Jägel, Matthias, 79104 Freiburg (DE); Schmalfuß, Moritz, 79254 Oberried (DE)
(74) Vertreter: Hehl, Ulrich

(56) Entgegenhaltungen:
- EP-A2- 1 480 009
- EP-A2- 1 906 141
- DE-A1-102006 013 340
- DE-A1-102008 013 906
- DE-A1-102009 035 984
- DE-A1-102009 049 809

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 10.

Scanner werden für vielfältige Überwachungs- und Vermessungsaufgaben verwendet. Dazu tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonrad auf, um periodisch eine Überwachungsebene oder ein Segment einer zweidimensionalen Überwachungsebene abzutasten. Viele Anwendungen erfordern aber die Abtastung eines dreidimensionalen Raumbereichs und nicht lediglich einer Fläche. Ein herkömmlicher Ausweg besteht darin, für eine Relativbewegung zwischen Laserscanner und Objekt zu sorgen, wie beispielsweise in der DE 197 41 730 B4. Dies erfordert erheblichen Aufwand, und zahlreiche Anwendungen eignen sich gar nicht für eine solche kontrollierte Relativbewegung.

Um eine Bewegung des Laserscanners gegenüber dem zu vermessenden Objekt zu vermeiden, werden Laserscanner zu einem 3D-Scanner weitergebildet. Ein Schritt in diese Richtung durch Mehrebenenabtastung kann erreicht werden, indem Rasterspiegelräder mit unterschiedlich geneigten Facetten als Ablenkeinheit verwendet werden. Dadurch entsteht ein Winkelversatz der jeweils zu einer Facette gehörigen Abtastebene. Zugleich wird aber der Scanwinkelbereich der jeweiligen Abtastebene auf den Winkelanteil der Facette von typischerweise weniger als 100° beschränkt. Außerdem werden die jeweiligen Abtastebenen verzerrt und unsymmetrisch. Die EP 1 286 178 A2 überwacht nach einem ganz ähnlichen Prinzip in einem vorderen Winkelbereich von nahezu 180° eine Hauptabtastebene und in einem rückwärtigen Winkelbereich über zwei um wenige Grad verkippte Spiegel zwei weitere Abtastebenen, die auf einen Winkelbereich von 40° beschränkt sind.

Als weiterer Lösungsansatz ist bekannt, eine zusätzliche Ablenkeinheit meist in Form eines Schwingspiegels zu verwenden, der für eine Ablenkung des Scanstrahls in einer zweiten Richtung sorgt. Dadurch kann die Abtastebene verschwenkt werden. Durch die Verwendung zweier Ablenkeinheiten entstehen aber erhöhte Kosten und ein größerer Bauraumbedarf, somit ein hoher optischer und mechanischer Aufwand, zudem mit zusätzlichen Sende- und Empfangssignalverlusten. In einer speziellen Lösung mit zusätzlichem Schwingspiegel gemäß DE 20 2009 012 114 U1 wird der 360°-Abtastbereich eines Drehspiegels aufgeteilt. In einem vorderen Winkelbereich wird in herkömmlicher Weise eine Fläche abgetastet. In einem hinteren Winkelbereich wird der Abtaststrahl mehrfach umgelenkt und fällt dann auf einen Schwingspiegel, der in einer Richtung quer zu der Ablenkrichtung des Drehspiegels verschwenkt wird. Somit wird über den hinteren Winkelbereich ein Raumausschnitt anstelle einer Fläche abgetastet.

Um mit einem einfachen Drehspiegel auszukommen und dennoch einen dreidimensionalen Raumbereich zu erfassen, kann der Drehspiegel zusätzlich zu seiner Rotation in einer weiteren Achse verkippt werden. In der DE 10 2008 032 216 A1 beispielsweise wird dazu die gesamte Scaneinheit samt Sender, Empfänger und Drehspiegel auf einem Ablenkteller angeordnet. Durch Verschwenken des Ablenktellers wird dann die Scanebene variiert, um so insgesamt einen dreidimensionalen Raumbereich zu überwachen. Die mechanische Konstruktion mit dem verschwenkbaren Ablenkteller sowie dessen Anbindung für Datenaustausch und Kommunikation ist aber ausgesprochen aufwändig. Für eine mechanisch unanfällige Anbindung kann zwar prinzipiell eine drahlose Übertragung von Daten und Energie vorgesehen werden. Angesichts der komplexen Datenpakete ist dies aber störanfällig und zumindest sehr kostenaufwändig.

Aus der EP 1 965 225 A2 ist ein weiterer Laserscanner mit einer drehbaren und zusätzlich verkippbaren Ablenkeinheit vorgesehen, um eine dreidimensionale Umgebung mit einem Laserstrahl abzutasten. Es wird in unterschiedlichen Ausführungsformen eine Vielzahl von Mechanismen zum Verkippen der Ablenkeinheit vorgeschlagen. Dabei wird jeweils der Verkippmechanismus zentral angesteuert, was dazu zwingt, eine entsprechende Verbindung zwischen stationären und mitbewegten Elementen zu schaffen, beispielsweise durch in eine Hohlwelle gelegte Leitungen oder sogar durch mechanische Verbindungen, die das Verkippen bewirken.

Die EP 1 906 141 A2 offenbart einen Laserscanner, der eine insgesamt rotierende Abtasteinheit mit Sender, Empfänger und zugehöriger Mess- und Steuerungseinheit aufweist. Im obereren Bereich der Abtasteinheit ist ein Drehspiegel vorgesehen, der auf einer Drehachse senkrecht zu derjenigen der Abtasteinheit rotiert und dessen Drehbewegung von derselben Mess- und Steuerungseinheit gesteuert wird.

In der DE 10 2009 035 984 A1 wird ein multifunktionaler Laufzeitsensor beschrieben, bei dem ein Rotor ein optisches Entfernungsmesssystem enthält. In einer Ausführungsform sind im Sende- wie Empfangspfad Linsensysteme vorgesehen, deren mittlere Linse verschwenkt oder gegenüber der optischen Achse parallelverschoben werden kann. Dadurch kann sowohl der Abbildungsmaßstab als auch die Richtung der Sende- und Empfangssysteme zueinander in der Auswerteeinheit eingestellt werden.

Aus der DE 10 2008 013 906 A1 ist ein optischer Laufzeitsensor bekannt, in dem jeweils eine Einheit mit dem Sender und dem Empfänger auf der gleichen Drehachse rotieren. In der Einheit des Senders ist ein Umlenkspiegel vorgesehen, der über einen Permanentmagneten in einer Spule gehaltert ist, so dass durch Einspeisung eines Stroms in die Spule der Umlenkspiegel verschwenkt wird.

Vor diesem Hintergrund ist Aufgabe der Erfindung, die Erweiterung des Überwachungsbereichs eines optoelektronischen Sensors mit einfachen Mitteln zu ermöglichen.

Diese Aufgabe wird durch einen optoelektronischen Sensor und ein Verfahren zur Erfassung von Objekten in einem Überwachungsbereich nach Anspruch 1 beziehungsweise 10 gelöst. Hierbei ist eine Ablenkeinheit vorgesehen, beispielsweise ein Drehspiegel, mit deren Hilfe durch periodische Ablenkung eine Ebene abgetastet wird. Die Ablenkeinheit ist zugleich in einer zweiten Achse senkrecht zu der Ebene verkippbar, um die Abtastebene zu variieren und dadurch einen dreidimensionalen Raumbereich zu erfassen. Die Erfindung geht von dem Grundgedanken aus, die Ablenkeinheit zusammen mit einer autarken Verkippungseinheit in einer beweglichen Abtasteinheit unterzubringen. Anders als herkömmlich rotiert nicht nur ein Spiegel mit seiner Welle, sondern die Abtasteinheit mit der Ablenkeinheit und der Verkippungseinheit einschließlich deren Elektronik. Dadurch wird ein autarker 3D-Scannerkopf gebildet. Autark oder eigenständig bedeutet unter anderem, die Verkippungseinheit von den stationären, nicht periodisch bewegten Elementen des Sensors aus weder elektronisch anzusteuern noch die Kippbewegung beispielsweise durch eine Zwangsführung mechanisch von außerhalb der Abtasteinheit vorzugeben. Vielmehr wird das Kippmuster oder der zeitliche Ablauf der Verkippung selbständig innerhalb der Abtasteinheit festgelegt. Es braucht dazu keinerlei Steuerungs- oder Datenverbindungen zwischen beweglicher Abtasteinheit und dem restlichen Sensor zu geben.

Die Erfindung hat den Vorteil, dass auf einfachem Weg der Sichtbereich eines Sensors erweitert wird. Dabei werden dreidimensionale Raumbereiche in Form eines Doppelkegels beziehungsweise frei konfigurierbare Änderungen der Abtastebene ermöglicht. Eine Regelung der Kippbewegung kann ebenso entfallen wie ein starken Langzeitbelastungen ausgesetzter Kippmechanismus mit ortsfesten Aktoren, die auf die bewegte Ablenkeinheit einwirken. Es müssen wegen der autarken Verkippungseinheit auch keine Datenpakete übertragen werden. Das wäre im Falle drahtloser Kommunikation aufwändig und störanfällig, bei leitungsgebundener Kommunikation müssten bewegte Kabel oder eine Hohlwelle vorgesehen werden, während die Erfindung auch mit einer Vollwelle funktioniert.

Die Verkippungseinheit weist bevorzugt ein aktives Verstellelement auf. Das ist ein an der Ablenkeinheit angebundener Aktor zu dessen Verkippung, der mit der Abtasteinheit mitbewegt ist. Besonders eignet sich wegen seines geringen Gewichts ein Piezoelement beziehungsweise eignen sich zwei Piezoelemente für eine Verkippung in zueinander entgegensetzte Richtung. Eine Mehrzahl von Piezoelementen, insbesondere ein Piezostack, kann für einen größeren Verstellbereich verwendet werden. Andere Aktoren, etwa Tauchspulen, Kurvenscheiben und dergleichen sind ebenfalls denkbar.

Der Sensor weist bevorzugt eine gegenüber der Abtasteinheit stationäre Synchronisationsmarke auf, die in einer bekannten Position der Abtasteinheit von einem Synchronisationssensor auf der Abtasteinheit erfassbar ist, um die periodische Ablenkung und die Verkippung miteinander zu synchronisieren. Dafür sind diverse Sensorprinzipien denkbar, etwa Hallsensoren oder Lichttaster. Die entsprechenden magnetischen oder optischen Synchronisationsmarken sind nicht mitbewegt beispielsweise innen an einem Gehäuse oder einer Frontscheibe des Sensors angebracht und werden in einer bestimmten Position der periodischen Abtastbewegung erfasst. So erfährt die Verkippeinheit ein- oder mehrfach je Periode beziehungsweise Umdrehung die tatsächliche Abtastposition und kann ein durch Zeittoleranzen entstehendes Auseinanderlaufen mit der gewünschten Verkippbewegung nachführen.

Die Verkippungseinheit weist bevorzugt ein Speicherelement zum Ablegen mindestens eines Verkippungsverlaufs sowie eine Kippsteuerung auf, um die Verkippung gemäß eines abgelegten Verkippungsverlaufes zu steuern. Durch den gespeicherten Verkippungsverlauf wird das gewünschte dreidimensionale Abtastmuster festgelegt. Dabei sind praktisch beliebige einfache und komplizierte Verkippungsverläufe denkbar. Beispielsweise kann ein Winkelversatz gespeichert werden, um den die Ablenkeinheit nach jeweils einer Periode oder mehrfach innerhalb einer Periode verkippt wird. Ebenso können Verkippungswinkel gespeichert sein, die dann nacheinander für eine Periode oder eine Teilperiode verwendet werden. Der Verkippungswinkel muss aber auch nicht abschnittsweise konstant sein, sondern kann ebenso stetig nach einer linearen oder einer anderen Funktion variiert werden. Der Verkippungsverlauf wird vorzugsweise zyklisch wiederholt. Der in dem Speicherelement abgelegte Verkippungsverlauf ist vorzugsweise auch im stationären Teil des Sensors bekannt, damit die Messdaten richtig zugeordnet werden. Dies wird aber vorteilhafterweise vorab und nicht im Betrieb festgelegt, damit die Abtasteinheit völlig autark bleibt.

Die Verkippungseinheit ist bevorzugt dafür ausgebildet, die Ablenkeinheit mit Beginn der periodischen Ablenkung zu verkippen. Sobald also die Ablenkeinheit sich für die periodische Abtastung in Bewegung setzt, beginnt auch die Verkippung mit einem vorzugsweise vorab zwischen stationärem Teil des Sensors und Verkippungseinheit vereinbarten Kippwinkel. Das sorgt für eine grobe Synchronisation, die dann durch Synchronisationsmarken verfeinert wird.

Der Sensor weist bevorzugt eine drahtlose Versorgung für die Abtasteinheit auf. Das erfolgt beispielsweise nach dem Generatorprinzip mit feststehenden Magneten und mitdrehenden Spulen. Es kann auch ein Energiespeicher als Ersatz oder zumindest als Puffer für die drahtlose Versorgung vorgesehen sein. Das Einsetzen der Energieerzeugung kann von der Verkippungseinheit als Auslöser genutzt werden, um die Ablenkeinheit mit Beginn der periodischen Ablenkeinheit zu verkippen.

Der Sensor weist bevorzugt mindestens einen Feedbacksensor zum Bestimmen des Kippwinkels der Ablenkeinheit auf. Dabei handelt es sich nochmals bevorzugt um einen optischen Sensor, wie eine Photodiode oder eine Zeile mit Lichtempfangselementen, die jeweils im stationären Teil des Sensors angebracht sind, um in einer bestimmten Abtastebene Sendelicht zu empfangen oder die Abtastebene am Auftreffort des Lichts zu erkennen. Durch den Feedbacksensor wird die Synchronisation zwischen erwartetem und tatsächlichem Kippwinkel verbessert. Es ist sogar möglich, dass die Verkippungseinheit Verkippungsverläufe verwendet, die im stationären Teil des Sensors nicht bekannt sind, sondern durch den Feedbacksensor gemessen werden. Denkbar ist im Übrigen auch anstelle eines Feedbacksensors im stationären Teil des Sensors ein Feedbacksensor innerhalb der Abstasteinheit, um eine Regelung zwischen von der Verkippungseinheit angesteuertem und tatsächlichem Kippwinkel zu erreichen. Der Feedbacksensor kann auch zur Synchronisation der Drehlage verwendet werden.

Die Ablenkeinheit weist bevorzugt strahlformende Eigenschaften auf. Üblich ist ein flacher Spiegel als Ablenkeinheit. Die Ablenkeinheit kann aber auch eine andere Kontur wie diejenige eines Hohl- oder Wölbspiegels aufweisen und so insbesondere eine Sende- oder Empfangsoptik ersetzen oder unterstützen.

Die Ablenkeinheit weist bevorzugt mehrere Spiegelflächen auf. Derartige Facetten werden beispielsweise durch mehrere nebeneinander angeordnete Spiegel oder ein Polygonspiegelrad erreicht. Dadurch wird der Überwachungsbereich pro Umdrehung mehrfach abgetastet. Die jeweiligen Facetten sind vorzugsweise flach, können aber auch mit einer Kontur etwa als Hohl- oder Wölbspiegel ausgebildet sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

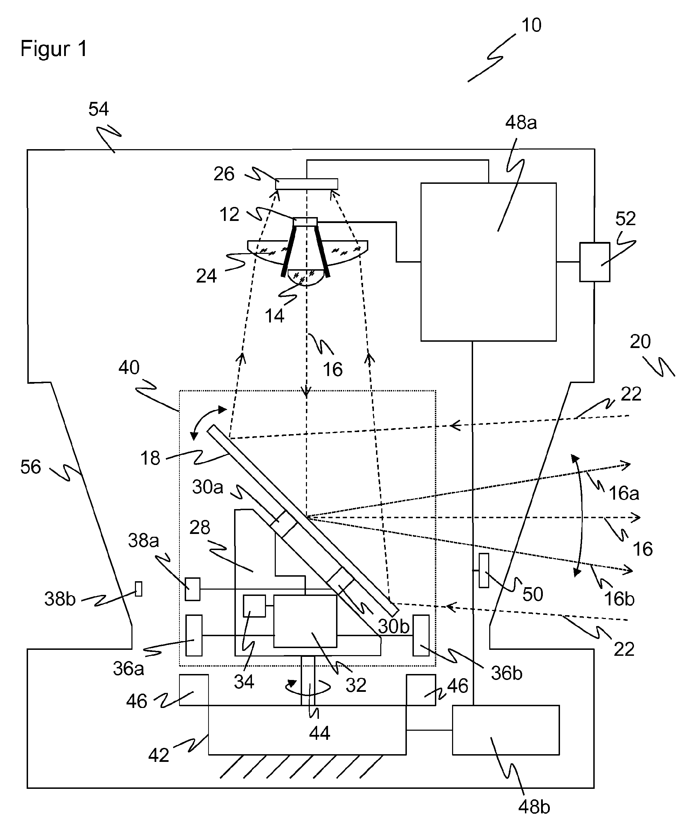

- Fig. 1: eine Schnittdarstellung eines Laserscanners mit einer rotierenden Abtasteinheit und eine Verkippungseinheit für deren Ablenkeinheit.

Figur 1 zeigt eine Schnittdarstellung eines als Laserscanner ausgebildeten Sensors 10. Es sind diverse andere Anordnungen der einzelnen Elemente eines optoelektronischen Sensors zur Erfassung von Objekten denkbar und von der Erfindung umfasst. Insbesondere sind Laserscanner mit anderen Anordnungen von Sende- und Empfangsoptiken und anderen Gehäuseformen bekannt. Die Darstellung soll also nur beispielhaft zu verstehen sein.

Ein Lichtsender 12, beispielsweise eine LED oder eine Laserdiode, sendet über eine Sendeoptik 14 einen Sendelichtstrahl oder Abtaststrahl 16 aus, der nach Ablenkung an einer Ablenkeinheit 18 aus dem Laserscanner 10 in einen Überwachungsbereich 20 austritt. Wird von dem Sendelichtstrahl 16 ein Objekt angetastet, so kehrt reflektiertes oder remittiertes Licht 22 zu dem Laserscanner 10 zurück und wird nach erneuter Ablenkung an der Ablenkeinheit 18 von einer Empfangsoptik 24 auf einen Lichtempfänger 26 gebündelt. Die mögliche Wellenlänge des verwendeten Lichts umfasst außer sichtbarem Licht auch den ultravioletten oder infraroten Bereich.

Die Ablenkeinheit 18 ist auf einem Drehsockel 28 angeordnet. Mit Hilfe von Piezoelementen 30a-b kann die Ablenkeinheit 18 verkippt werden. Die Piezoelemente 30a-b werden von einer Kippsteuerung 32 mit einem Speicher 34 angesteuert, und diese Elemente bilden gemeinsam eine Verkippungseinheit. Die Verkippungseinheit weist außerdem mindestens eine Spule 36 sowie einen Synchronisationssensor 38a auf, insbesondere einen Hallsensor. Wie in Figur 1 durch ein gestricheltes Rechteck illustriert, werden Ablenkeinheit 18 und Verkippungseinheit als Abtasteinheit 40 zusammengefasst.

In Figur 1 ist die Ablenkeinheit 18 als flacher Drehspiegel ausgebildet. Alternativ sind andere Formen möglich, beispielsweise strahlformende Konturen. Außerdem ist denkbar, zwei oder mehr Spiegel nebeneinander anzuordnen oder anstelle des Planspiegels ein Polygonspiegelrad zu verwenden.

Ein Antrieb 42 versetzt die Abtasteinheit 40 in eine periodische Bewegung, insbesondere eine Drehbewegung bezüglich einer durch eine Welle 44 vorgegebenen Drehachse. Die jeweilige Winkelstellung wird von einem nicht dargestellten Encoder bestimmt. Im Verlauf der Drehbewegung würde der Abtaststrahl 16 bei konstantem Kippwinkel der Ablenkeinheit 18 wie dargestellt bezüglich der Drehachse eine zu der Drehachse senkrechte Abtastebene abtasten. Durch Variation des Kippwinkels mit Hilfe der Verkippungseinheit 30a-b, 32 wird diese Abtastung variiert, wie durch zwei beispielhafte Abtaststrahlen 16a-b bei zwei denkbaren Verkippungen illustriert. Somit wird anstelle einer einfachen Abtastebene ein Raumbereich mit einer Abtastkurve erfasst, die von dem zeitlichen Verlauf der jeweiligen Verkippung abhängt. Die Verkippungseinheit 30a-b, 32 wird über die mitbewegten Spulen 36a-b und einen feststehenden Magnetring 46 berührungslos nach dem Generatorprinzip versorgt. Die Energieübertragung kann alternativ auch nach einem anderen Wirkprinzip beruhen.

Eine Steuer- und Auswertungseinheit 48a-b ist mit dem Lichtsender 12 und dem Lichtempfänger 26 verbunden, um den Sendelichtstrahl 16 zu erzeugen und ein aus remittiertem Licht 22 in dem Lichtempfänger 26 erzeugtes Empfangssignal auszuwerten. Bei dieser Auswertung wird festgestellt, ob ein Objekt erfasst wurde. Die Steuer- und Auswertungseinheit 48a-b steuert außerdem den Antrieb 42 und erhält das Winkelsignal des Encoders. Die Steuer- und Auswertungseinheit 48a-b ist zweiteilig mit zwei untereinander verbundenen Blöcken im rechten oberen und rechten unteren Teil des Sensors 10 dargestellt. Das soll nur stellvertretend dafür stehen, dass die notwendige Elektronik innerhalb des Sensors 10 nahezu beliebig in nicht von den optischen Elementen beanspruchten Bereichen angeordnet werden kann

Vorzugsweise nimmt die Steuer- und Auswertungseinheit 48a-b mit der Erfassung der Objekte auch eine Positionsbestimmung vor. Dazu werden die drei Kugelkoordinaten bestimmt. Der Abstand wird mit einem der einleitend genannten Lichtlaufzeitverfahren gemessen. Der erste Winkel bezüglich der Drehbewegung für die Erfassung eines Objekts ist von dem Encoder unmittelbar bekannt. Den zweiten Winkel entnimmt die Steuer- und Auswertungseinheit 48a-b aus dem Verkippungsverlauf der Ablenkeinheit 18. Da die Kippsteuerung 32 autark arbeitet und somit zwischen der Steuer- und Auswertungseinheit 48a-b keine Datenverbindung besteht, ist der Verkippungsverlauf vorzugsweise vorab vereinbart und sowohl im stationären wie im mitdrehenden Teil des Sensors 10 bekannt. Denkbar ist auch, am Rand des Abtastbereichs einen gegenüber der Abtasteinheit 40 stationären Feedbacksensor 50 anzubringen, etwa in Form einer Photodiode oder einer ortsauflösenden Sensorzeile, um den jeweiligen aktuellen Kippwinkel der Abtasteinheit 18 zu messen und der Steuer- und Auswertungseinheit 48a-b mitzuteilen. Dieser Feedbacksensor 50 kann auch zur Synchronisation bestimmen, wann die Ablenkeinheit 18 eine bestimmte Verkippung einnimmt, etwa eine Ausgangsstellung. Der Feedbacksensor 50 kann auch zur Synchronisation der Drehposition beziehungsweise Drehbewegung verwendet werden.

Die Kippsteuerung 32 startet im Betrieb den Verkippungsverlauf eigenständig, insbesondere ohne Ansteuerung durch die Steuer- und Auswertungseinheit 48a-b, sobald die Abtasteinheit 40 sich zu bewegen beginnt. Die Bewegung wird beispielsweise dadurch erkannt, dass über die Spulen 36a-b Energie erzeugt wird. Die Kippsteuerung 32 startet daraufhin vorzugsweise mit einer Art Reset, jedenfalls an einer definierten Stelle des Verkippungsverlaufs, damit sich Kippsteuerung 32 und Steuer- und Auswertungseinheit 48a-b ohne Datenaustausch über den Ablauf einig sind.

Der Verkippungsverlauf wird aus dem Speicher 34 ausgelesen und beschreibt den zeitlichen Ablauf der nacheinander einzunehmenden Kippwinkel der Ablenkeinheit 18. Prinzipiell ist die Synchronizität durch den Verkippungsverlauf selbst gegeben, den die Steuer- und Auswertungseinheit 48a-b auch kennt. Da der Verkippungsverlauf in der Praxis regelmäßig aufgrund von Toleranzen und Störungen nicht ausreichend zuverlässig reproduziert wird, erzeugt der Synchronisationssensor 38b jeweils ein Synchronisationssignal, wenn eine am stationären Teil des Sensors 10 angebrachte Synchronisationsmarke 38b erfasst wird. Dadurch kann sich die Kippsteuerung 32 einmal oder mehrmals pro Umdrehung auf die tatsächliche Winkelposition synchronisieren.

Ein möglicher Verkippungsverlauf sieht vor, dass die Kippsteuerung 32 anfänglich einen ersten Kippwinkel einstellt und mit jedem oder jedem i-ten Synchronisationssignal, das als Auslöser oder Trigger fungiert, einen neuen Kippwinkel aus dem Speicher 34 ausliest und einstellt oder den Kippwinkel um einen bestimmten Differenzwinkel verstellt. Der Vorgang wiederholt sich zyklisch, nachdem der Verkippungsverlauf vollendet ist. Je nachdem, wie viele Synchronisationsmarken 38b über den Umfang angebracht sind und ob jedes Synchronisationssignal als Trigger wirkt, wird so nach Bruchteilen einer Umdrehung, jeder vollen Umdrehung oder mehreren Umdrehungen die Abtastebene verkippt. Der Verkippungsverlauf kann aber auch kontinuierliche Verkippungen mit linearem oder nichtlinearem Verhalten vorschreiben. Die Synchronisationssignale dienen dann dazu, eine etwaige Drift aufzudecken, die von der Kippsteuerung 32 durch eine sprunghafte Anpassung, eine Verzögerung oder eine Beschleunigung der Anwendung des Verkippungsverlaufs ausgeglichen wird.

Eine alternative oder ergänzende Synchronisierung kann dadurch erfolgen, dass die Steuer- und Auswertungseinheit 48a-b den aktuellen Kippwinkel über den Feedbacksensor 50 bestimmt.

Jedenfalls kennt die Steuer- und Auswertungseinheit 48a-b auf einem der beschriebenen Wege zusätzlich zum ersten Winkel der Drehstellung der Abstasteinheit 40 und der mittels Lichtlaufzeit gemessenen Entfernung auch den Kippwinkel und damit den zweiten Winkel der Kugelkoordinaten eines angetasteten Objekts. Die derart gewonnenen dreidimensionalen Objektkonturen oder ein anderes gewünschtes Ergebnis der Auswertung, beispielsweise ein binäres Objektfeststellungssignal insbesondere für sicherheitstechnische Anwendungen, eine Objektliste mit Koordinaten der Erfassung oder ein zwei- beziehungsweise dreidimensionales Rohbild, wird dann an einem Ausgang 52 bereitgestellt. Der Sensor 10 wird von einem Gehäuse 54 geschützt, das im Bereich des Lichtaustritts und Lichteintritts eine vorzugsweise schräg gestellte, umlaufende Frontscheibe 56 aufweist.

## Patentansprüche

1. Optoelektronischer Sensor (10), insbesondere Laserscanner, zur Erfassung von Objekten in einem Überwachungsbereich (20) mit mehr als einer Abtastebene, der einen Lichtsender (12) zum Aussenden eines Lichtstrahls (16), einen Antrieb (42), eine mit dem Antrieb (42) in periodische Bewegung versetzbare Abtasteinheit (40) mit einer Ablenkeinheit (18) zur periodischen Ablenkung des Lichtstrahls (16) in eine Abtastebene, einen Lichtempfänger (26) zum Erzeugen eines Empfangssignals aus dem in dem Überwachungsbereich (20) remittierten oder reflektierten Lichtstrahl (22), einen Encoder zur Bestimmung der Winkelstellung der Abtasteinheit (40) sowie eine Steuer- und Auswertungseinheit (48a-b) aufweist, welche den Antrieb (42) steuert, das Winkelsignal des Encoders erhält und für die Erfassung und Positionsbestimmung der Objekte anhand des Empfangssignals und des Winkelsignals ausgebildet ist, wobei die Ablenkeinheit (18) verkippbar ist, um die Abtastebene zu variieren,
**dadurch gekennzeichnet,**
**dass** die Abtasteinheit (40) eine autarke Verkippungseinheit (30a-b, 32) mit einer Kippsteuerung (32) zum Verkippen der Ablenkeinheit (18) aufweist, indem zwischen Kippsteuerung (32) und Steuer- und Auswertungseinheit (48a-b) keine Datenverbindung besteht und die Kippsteuerung ihren Verkippungsverlauf eigenständig ohne Ansteuerung durch die Steuer- und Auswertungseinheit (48a-b) startet, sobald die Abtasteinheit (40) sich zu bewegen beginnt.

2. Sensor (10) nach Anspruch 1,
wobei die Verkippungseinheit (30a-b, 32) ein aktives Verstellelement (30a-b) aufweist, insbesondere mindestens ein Piezoelement.

3. Sensor (10) nach Anspruch 1 oder 2,
der eine gegenüber der Abtasteinheit (18) stationäre Synchronisationsmarke (38b) aufweist, die in einer bekannten Position der Abtasteinheit (40) von einem Synchronisationssensor (38a) auf der Abtasteinheit (40) erfassbar ist, um die periodische Ablenkung und die Verkippung miteinander zu synchronisieren.

4. Sensor (10) nach einem der vorhergehenden Ansprüche,
wobei die Verkippungseinheit (30a-b, 32) ein Speicherelement (34) zum Ablegen mindestens eines Verkippungsverlaufs sowie eine Kippsteuerung (32) aufweist, um die Verkippung gemäß eines abgelegten Verkippungsverlaufes zu steuern.

5. Sensor (10) nach einem der vorhergehenden Ansprüche,
wobei die Verkippungseinheit (30a-b, 32) dafür ausgebildet ist, die Ablenkeinheit (18) mit Beginn der periodischen Ablenkung zu verkippen.

6. Sensor (10) nach einem der vorhergehenden Ansprüche,
der eine drahtlose Versorgung (36a-b, 46) für die Abtasteinheit (40) aufweist.

7. Sensor (10) nach einem der vorhergehenden Ansprüche,
der mindestens einen Feedbacksensor (50) zum Bestimmen des Kippwinkels der Ablenkeinheit (18) aufweist.

8. Sensor (10) nach einem der vorhergehenden Ansprüche,
wobei die Ablenkeinheit (18) strahlformende Eigenschaften aufweist.

9. Sensor (10) nach einem der vorhergehenden Ansprüche,
wobei die Ablenkeinheit (18) mehrere Spiegelflächen aufweist.

10. Verfahren zur Erfassung von Objekten in einem Überwachungsbereich (20) mit mehr als einer Abtastebene, bei dem ein Lichtsender (12) einen Lichtstrahl (16) aussendet, der von einer mit einem Antrieb (42) bewegten Abtasteinheit (40) mit einer Ablenkeinheit (18) periodisch in eine Abtastebene abgelenkt wird, wobei ein Encoder die Winkelstellung der Abtasteinheit (40) bestimmt, und ein Lichtempfänger (26) aus dem in dem Überwachungsbereich (20) remittierten oder reflektierten Lichtstrahl (22) ein Empfangssignal erzeugt, wobei die Ablenkeinheit (18) gemäß einem abgelegten Verkippungsverlauf
verkippt wird, um die Abtastebene zu variieren und wobei eine Steuer- und Auswertungseinheit (48a-b) den Antrieb (42) steuert, auf Basis des Empfangssignals den Abstand der Objekte misst, das Winkelsignal des Encoders erhält und aus dem Verkippungsverlauf der Ablenkeinheit (18) deren Kippwinkel entnimmt, um die Position der Objekte zu bestimmen,
**dadurch gekennzeichnet,**
**dass** die Ablenkeinheit (18) von einer auf der Abtasteinheit (40) mitbewegten Verkippungseinheit (30a-b, 32) autark verkippt wird, ohne dass ein Datenaustausch mit der Steuer- und Auswertungseinheit (48a-b) oder eine Ansteuerung der Verkippungseinheit (30a-b, 32) durch die Steuer- und Auswertungseinheit (48a-b) stattfindet.

## Claims

1. An optoelectronic sensor (10), in particular a laser scanner, for detecting objects in a monitoring area (20) with more than one scanning plane, the sensor (10) comprising a light transmitter (12) for transmitting a light beam (16), a drive (42), a scanning unit (40) which the drive (42) can set into a periodic movement and having a deflection unit (18) for periodically deflecting the light beam (16) into a scanning plane, a light receiver (26) for generating a reception signal from the light beam (22) reflected or remitted in the monitoring area (20), an encoder for determining the angular position of the scanning unit (40) as wells as a control and evaluation unit (48a-b) which controls the drive (42), receives the angle signal of the encoder and is configured for the detection and position determination of the objects based on the reception signal and the angle signal, wherein the deflection unit (18) is tiltable in order to vary the scanning plane, **characterized in that** the scanning unit (40) comprises a stand-alone tilt unit (30a-b, 32) having a tilt control (32) for tilting the deflection unit (18) **in that** there is no data connection between tilt control (32) and control and evaluation unit (48a-b) and the tilt control starts its tilt pattern on its own, without control of the control and evaluation unit (48a-b), as soon as the scanning unit (40) starts to move.

2. The sensor (10) according to claim 1,
wherein the tilt unit (30a-b, 32) comprises an active actuating element (30a-b), in particular at least one piezo element.

3. The sensor (10) according to claim 1 or 2,
comprising a synchronization mark (38b) being stationary with respect to the scanning unit (18) and detectable by a synchronization sensor (38a) on the scanning unit (40) in a known position of the scanning unit (40) in order to synchronize the periodic deflection and the tilt.

4. The sensor (10) according to one of the preceding claims,
wherein the tilt unit (30a-b, 32) comprises a memory element (34) for storing at least one tilt pattern and a tilt control (32) in order to control the tilt according to a stored tilt pattern.

5. The sensor (10) according to one of the preceding claims,
wherein the tilt unit (30a-b, 32) is configured to tilt the deflection unit (18) with the beginning of the periodic deflection.

6. The sensor (10) according to one of the preceding claims,
comprising a wireless supply (36a-b, 46) for the scanning unit (40).

7. The sensor (10) according to one of the preceding claims,
comprising at least one feedback sensor (50) for determining the tilt angle of the deflection unit (18).

8. The sensor (10) according to one of the preceding claims,
wherein the deflection unit (18) has beam-shaping properties.

9. The sensor (10) according to one of the preceding claims,
wherein the deflection unit (18) has several reflecting surfaces.

10. A method for detecting objects in a monitoring area (20) with more than one scanning plane, wherein a light transmitter (12) transmits a light beam (16) which is periodically deflected in a scanning plane by a scanning unit (40) having a deflection unit (18) and being moved by a drive (42), wherein an encoder determines the angular position of the scanning unit (40) and a light receiver (26) generates a reception signal from the light beam (22) reflected or remitted in the monitoring area (20), wherein the deflection unit (18) is tilted according to a stored tilt pattern in order to vary the scanning plane and wherein a control and evaluation unit (48a-b) controls the drive (42), measures the distance of the objects based on the reception signal, receives the angle signal of the encoder and determines the tilt angle from the tilt pattern of the deflection unit (18) in order to determine the position of the objects,
**characterized in that** the deflection unit (18) is tilted in a stand-alone manner by a tilt unit (30a-b, 32) moving with the scanning unit (40), without a data exchange with the control and evaluation unit (48a-b) or a control of the tilt unit (30a-b, 32) by the control and evaluation unit (48a-b) taking place.

## Revendications

1. Capteur optoélectronique (10), en particulier scanner à laser pour détecter des objets dans une zone de surveillance (20) avec plus d'un plan de balayage, qui présente un émetteur de lumière (12) pour émettre un rayon lumineux (16), un entraînement (42), une unité de balayage (40) susceptible d'être mise en mouvement périodique avec l'entraînement (42) et comportant une unité de déviation (18) pour dévier périodiquement le rayon lumineux (16) dans un plan de balayage, un récepteur de lumière (26) pour engendrer un signal de réception à partir du rayon lumineux (22) réémis ou réfléchi dans la zone de surveillance (20), un encodeur pour déterminer la position angulaire de l'unité de balayage (40) ainsi qu'une unité de commande et d'évaluation (48a-b) qui commande l'entraînement (42), qui reçoit le signal angulaire de l'encodeur et qui est réalisée pour la détection et la détermination de la position de l'objet à l'aide du signal de réception et du signal angulaire, l'unité de déviation (18) pouvant être basculée pour varier le plan de balayage,
**caractérisé en ce que**
l'unité de balayage (40) présente une unité de basculement (30a-b, 32) autonome avec une commande de basculement (32) pour faire basculer l'unité de déviation (18), par le fait qu'entre la commande de basculement (32) et l'unité de commande et d'évaluation (48a-b) n'existe aucune connexion de données et que la commande de basculement démarre son déroulement de basculement de manière indépendante sans pilotage par l'unité de commande et d'évaluation (48a-b), dès que l'unité de balayage commence à se déplacer.

2. Capteur (10) selon la revendication 1,
dans lequel l'unité de basculement (30a-b, 32) présente un élément de réglage (30a-b) actif, en particulier au moins un élément piézoélectrique.

3. Capteur (10) selon la revendication 1 ou 2,
qui présente une marque de synchronisation (38b) stationnaire par rapport à l'unité de balayage (18) qui est détectable sur l'unité de balayage (40) par un capteur de synchronisation (30a) dans une position connue de l'unité de balayage (40) pour synchroniser l'une à l'autre la déviation périodique et le basculement.

4. Capteur (10) selon l'une des revendications précédentes,
dans lequel l'unité de basculement (30a-b, 32) présente un élément de mémorisation (34) pour déposer au moins un déroulement de basculement ainsi qu'une commande de basculement (32) pour commander le basculement selon un déroulement de basculement déposé.

5. Capteur (10) selon l'une des revendications précédentes,
dans lequel l'unité de basculement (30a-b, 32) est réalisée pour faire basculer l'unité de déviation (18) au début de la déviation périodique.

6. Capteur (10) selon l'une des revendications précédentes,
qui présente une alimentation sans fil (36a-b, 46) pour l'unité de balayage (40).

7. Capteur (10) selon l'une des revendications précédentes,
qui présente au moins un capteur de rétroaction (50) pour déterminer l'angle de basculement de l'unité de déviation (18).

8. Capteur (10) selon l'une des revendications précédentes,
dans lequel l'unité de déviation (18) présente des propriétés formant un faisceau.

9. Capteur (10) selon l'une des revendications précédentes,
dans lequel l'unité de déviation (18) présente plusieurs surfaces réfléchissantes.

10. Procédé de détection d'objets dans une zone de surveillance (20) avec plus d'un plan de balayage, dans lequel un émetteur de lumière (12) émet un rayon lumineux (16) qui est dévié périodiquement dans un plan de balayage par une unité de balayage (40) déplacée par un entraînement (42), comportant une unité de déviation (18), un encodeur déterminant la position angulaire de l'unité de balayage (40), et un récepteur de lumière (26) engendrant un signal de réception à partir du rayon lumineux (22) réémis ou réfléchi dans la zone de surveillance (20), l'unité de déviation (18) étant basculée selon un déroulement de basculement déposé pour varier le plan de balayage, et une unité de commande et d'évaluation (48a-b) commandant l'entraînement (42), mesurant sur la base du signal de réception la distance des objets, recevant le signal angulaire de l'encodeur et déduisant leur angle de basculement à partir du déroulement de basculement de l'unité de déviation (18) pour déterminer la position des objets,
**caractérisé en ce que**
l'unité de déviation (18) est basculée de façon autonome par une unité de basculement (30a-b, 32) déplacée en même temps sur l'unité de balayage (40), sans qu'un échange de données avec l'unité de commande et d'évaluation (48a-b) ou un pilotage de l'unité de basculement (30a-b, 32) soit effectuée par l'unité de commande et d'évaluation (48a-b).
